# EUROPEAN PATENT SPECIFICATION

(11) **EP 1 899 939 B1**
(45) Date of publication and mention of the grant of the patent: **16.03.2011**
(21) Application number: 06726517.3
(22) Date of filing: 24.03.2006
(51) Int. Cl.: G09B 5/06, G09B 1/36, A63F 9/00

(54) **MANIPULABLE INTERACTIVE DEVICES**
MANIPULIERBARE INTERAKTIVE EINRICHTUNGEN
DISPOSITIFS INTERACTIFS MANIPULABLES

(30) Priority: 24.03.2005 GB 0506159; 02.06.2005 US 142955
(43) Date of publication of application: 19.03.2008
(73) Proprietor: Smalti Technology Limited, Brynford House Holywell Flintshire CH8 7RD (GB)
(72) Inventor: OWEN, Martin, Bristol BS1 5UH (GB)
(74) Representative: Symons, Rupert Jonathan
(86) International application number: PCT/GB2006/001107
(87) International publication number: WO 2006/100513

(56) References cited:
- US-A1- 2004 063 078
- ANDREAS HEINEMANN, JUSSI KANGASHARJU, FERNANDO LYARDET, MAX MÜHLHÄUSER: "iClouds - Peer-to-Peer Information Sharing in Mobile Environments"[Online] 2003, - 2003 pages 1-10, XP002387317 Retrieved from the Internet: URL:http://iclouds.tk.informatik.tu-darmst adt.de/iClouds/pdf/europar2003.pdf> [retrieved on 2006-06-26]
- GERD KORTUEM: "Proem: A Peer-to-Peer Computing Platform for Mobile Ad-hoc Networks"[Online] 16 November 2003 (2003-11-16), pages 1-6, XP002387316 Retrieved from the Internet: URL:http://web.archive.org/web/20031116133 920/http://www.cs.arizona.edu/mmc/10+Kortu em.pdf> [retrieved on 2006-06-27]
- RYOICHI WATANABE, YUICHI ITOH, MASATSUGU ASAI, YOSHIFUMI KITAMURA,FUMIO KISHINO: "The Soul of ActiveCube - Implementing a Flexible, Multimodal, Three-Dimensional Spatial Tangible Interface" ACM COMPUTERS IN ENTERTAINMENT, [Online] vol. 2, 4 October 2004 (2004-10-04), pages 1-13, XP002387318 Retrieved from the Internet: URL:http://www-human.ist.osaka-u.ac.jp/Act iveCube/AC-CIE.pdf> [retrieved on 2006-06-26]
- KRISTOF VAN LAERHOVEN, NICOLAS VILLAR, ALBRECHT SCHMIDT, GERD KORTUEM HANS GELLERSEN: "Using an Autonomous Cube for Basic Navigation and Input"[Online] 2003, pages 1-8, XP002387319 Retrieved from the Internet: URL:http://ubicomp.lancs.ac.uk/~villar/pub lications/icmipui_2003.pdf> [retrieved on 2006-03-26]
- NINTENDO: 'nintendo ds fact sheet' INTERNET CITATION, [Online] 01 August 2004, pages 1 - 2, XP007915023 Retrieved from the Internet: <URL:http://www.gamecubicle.com/hardware-ni ntendo_ds_spec_sheet.htm> [retrieved on 2010-09-22]
- NITENDO: "nintendo ds fact sheet", INTERNET CITATION, 1 August 2004 (2004-08-01), pages 1-2, XP007915023, Retrieved from the Internet: URL:http://www.gamecubicle.com/hardware-ni ntendo_ds_spec_sheet.htm [retrieved on 2010-09-22]

## Description

This invention relates to a manually manipulable device, especially a device which is adapted to interact with a similar device or devices according to their relative locations so as to produce a sensory response for a user, such a device being especially suitable for educational or entertainment purposes.

In the article "iClouds: Peer-to-peer Information Sharing in Mobile Environments" by Andreas Heinemann et al, a ubiquitous computer system is proposed in which information is made available to an entire group of people and in which the distributed information is based on individual user contributions through peer-to-peer communications and data exchange. In short, iCouds provides a selective file sharing environment between affiliated groups of users each having a personal PDA. Each iCloud-enabled PDA periodically scans the local vicinity to identify affiliated devices (or nodes), and each device provides an indication of its data needs (or "iWish") and its available data contribution (or "iHave"). The definition of the PDA's data needs permits the PDA to control access by essentially firewalling unsolicited data downloads from a third party device, while the iHave list allows selected data to be selectively pushed or provided to another interested iCloud-enabled PDA having a matching iWish data requirement.

In Proem "A Peer-to-Peer Computing Platform for Mobile Ad Hoc Networks" by Korteum (related to the iClouds Project and detailed at URL:http://web.archive.org/web/20050306065830/http://icloud.tk.informatik.tu-darmstadt.de/iClouds/Publications.html it is explained that PDAs and other cellular devices may use a variety of technologies, including Bluetooth, to establish a network connectivity of devices to share (through transmission) information. Such devices merely replicate data or allow a user of the device to modify the data based on considered action of the user. The PDAs described by Korteum are not sufficiently intelligent to assess the surrounding network of devices and assimilate information to produce an entirely new result that is displayed on the device, but merely allow data sharing.

EP-A-1486237 relates to the use of two, correctly orientated and juxtaposed polyhedral objects that interact to provide stimulus that rewards the correct justaposition of particular polyhedral objects. Particularly, when a picture of one cube is placed adjacent the same picture on the other cube, with both pictures the right way up, this is detected and the associated sound is emitted. The pictures on each picture-bearing face is permanently fixed and does not change based on any surrounding block. Indeed, the sound-emitting systems are arranged to emit a secondary sound only upon detecting that the first and second polyhedral object have been juxtaposed with a further face of the first polyhedral object facing a further face of the second polyhedral object and with the picture on the first picture-bearing face of the first polyhedral object at its intended angle being observable adjacent to a picture on a second picture-bearing face of the second polyhedral object when looked at in a direction substantially parallel to the further facing faces. EP-A-1486237 therefore permits the building of an interactive storyboard that reinforces learning by providing a story that unfolds, with each picture on a picture-bearing face forming a frame in a sequence depicting the story. The images of the polyhedral objects relate to the story to be told and are thus permanently fixed.

US 4,936,780 to Cogliano merely describes a block with indicia applied to only one surface and a sensor that triggers sound through a speaker when the sensor is triggered. Again, like EP-A-1486237, there is a permanent relationship between the applied image and their respective surfaces. No change in the output results from the detection of any neighbouring block(s).

In US 5,823,782 to Marcus, we are taught that a "working platform" or reading table that uniquely identifies the representation of the character on the block and that the positioning of the block relative to other blocks is contemplated. However, there is a permanently fixed relationship between the characters on each assigned face of each block, i.e. the blocks may include between one and six characters on its respective surfaces... the block will include six different transmission systems, with each character/transmission system pair provided proximate to opposed surfaces from each other. Indeed, the working platform identifies not only the character information but also the location of a block relative to other blocks so as to allow identification of whole words, phrases and/or mathematical results. Therefore, the working platform includes a grid of readers.

US 5,320,358 describes the use of different forms of sensor trigger, while US 6,149,490 to Hampton provides background to the automated control of the motors (through a compact and highly controllable form of drive system) based on limited communication between toys, especially mannequins. Particularly, in US 6,149,490, the toy includes sensors, e.g. IR transmitters and receivers, for allowing communication between the toys. For instance, if several of the toys are placed in close proximity, and one detects a sensory input that the controller interprets as instructions to make the toy dance, e.g. four loud, sharp sounds in succession, the motor of the toy will be activated so that cam of the foot portion will be rotated by the control shaft to cause repetitive pivoting of the foot portion, i.e. dancing of the toy. This toy will then signal the other proximate toys via the IR link to begin to dance.

In the article "Tangible Interfaces for Manipulation and Exploration of Digital Information Topography" by Gorbet et al, published in the Proceedings of the CHI '98, April 18-23, 1998, ACM, Los Angeles, California, USA (hereinafter "Gorbet"), the author describes a system in which permanent images are presented on each so-called "Triangle" (or "Tiles") for an entire application. Indeed, the images are always story specific or application specific. Furthermore, in Gorbet, output from its "Triangles" is not through the Triangle itself, but rather via a connected computer that interprets the associations formed between connected Triangles, i.e. through the "mother triangle". Specifically, these mother triangles differ from others Triangles in that the mother Triangle has a cable that provides power to itself and to other triangles, as well as a serial communication to a host computer. The output in Gorbet is therefore not achieved in the device nor is it achieved in the response generator of a similar manipulable device, but rather the output of Gorbet entirely emanates from a connected PC.

The article by Laerhoven et al, namely "Using an Autonomous Cube for Basic Navigation Input" (Proceedings of the 5th International Conference on Multimodal Interfaces, ICMI '03, 5-7 November 2003) relates to a system that permits the identification of the orientation of a cube by using a combination of dual-axis accelerometers and a capacitive sensor (for proximity measurement). The cube is arranged to "output information about itself to its environment when its state has changed or when a certain gesture is performed". In a similar way to a conventional die, the faces of the tube are permanently labelled. In operation, the cube's relative orientation is broadcast when the cube senses that it is being manipulated, while the final orientation of the cube defines a function that is performed at a remote device, such as an audio system.

The article "The Soul of Active Cube - Implementing a Flexible, Multimodal, Three Dimensional Spatial Tangible Interface" by Watanabe et al [published in ACM COMPUTERS IN ENTERTAINMENT, vol. 2, 4 October 2004, pages 1-13, XP002238731] relates to 3D-modelling. Particularly, the ActiveCube system allows users to construct and interact with three-dimensional (3D) environment using physical cubes equipped with input/output devices. Spatial, temporal, and functional consistency is always maintened between the physical objet and its corresponding representation in the computer. The rationale behind this proposed system is that it would be easier to understand what happens in the virtual environment because the constructed object would act as a physical replica of the virtue structure. In this respect, a computer recognizes the 3D structure of connected cubes in real time, so consistency is always maintained between the physical objet and its corresponding representasion in the computer.

The Nintendo DS Datasheet (XP007915023) describes a gaming console having dual screens and a wireless gaming sharing capability/mode.

According to a first aspect of the invention there is provided a manually manipulable device according to claim 1.

In a second aspect of the invention there is provided a set of at least two manually manipulable devices according to claim 18.

Further aspects of the invention are realised by the learning apparatus of claim 27 and the games apparatus of claim 28.

The characterization may comprise visual display material or audio output material, and will vary depending on the particular application or purpose of the device or devices. For example, visual display material may comprise a letter or group of letters (e.g. phoneme) or word or words, and the sensory response may comprise speech corresponding to a word or phrase or sentence spelt out by the letters or words. In another application, visual display material may comprise a number or mathematical symbol, and the sensory response may comprise speech relating to mathematical properties of the numbers on the devices. In yet another application, visual display material may comprise a musical symbol and the sensory response may be an audio musical response. In an example in which the characterization comprises audio output material, this may comprise the audio equivalent of any of the examples of visual display material given above. In preferred embodiments of the invention, the sensory response comprises an audio response which may be generated by one or more devices, each device thus incorporating an audio generator to provide the audio response. However, in other examples of the invention, the sensory response comprises a visual response generated by one or more devices.

Each device incorporates a visual display unit which displays visual display material and/or is able to generate a visual sensory response, which may be a static or animated visual display. Preferably, each device is programmable to allow the visual display material and the sensory response to be programmed to suit different applications, for example, to accommodate letters or words or numbers or musical symbols as described above, or any other visual display material, and to generate corresponding audio or visual responses.

Therefore, a device according to the invention is preferably a fully programmable, multifunctional device which can be adapted for use as a learning aid in relation to language, mathematics or music or other subjects. Such a device can be readily adapted to be used in the manner of known multi-component, educational apparatus such as Cuisinaire rods (used to teach arithmetic), dominoes and jigsaws, each component (rod, domino or jigsaw piece) being embodied in the form of a device according to the invention, which is then able to respond visually or audibly to enhance the experience of the user of the apparatus.

The communications unit incorporated in the device is adapted to communicate with similar devices with which it is used to co-ordinate the sensory response appropriate to an array of multiple devices. Each device communicates relevant information about itself corresponding to its characterisation and may be a simple identity code. The sensory response is made evident through one or more of the devices, and could include a separate response generator.

Communication of a sensory response to any device occurs via the communications unit.

Preferably, the communications unit is a wireless device, that may be implemented using mobile telephone technology or the like.

Each device is provided with a proximity sensor, or multiple proximity sensors, adapted to sense the proximity of a similar device in any one of multiple adjacent positions, for example, adjacent to each of multiple edges of the device. Each device is preferably farther adapted to identify an adjacent device and to communicate information of both the identity and position of an adjacent device to other devices or to the central control unit via said communication unit so that an appropriate response can be generated.

The proximity sensor may comprise a magnetic or an electrical device, and may require physical contact between adjacent devices to be operational.

Preferably, a manually manipulable device according to the invention is constructed with a robust outer casing suitable for handling by a child aged 3 or older.

Preferably, a manually manipulable device according to the invention has registration features, such as protrusions and indents, in its outer surface that allow the device to be placed in registration with other such devices. Preferably, the registration features provide a visual guide during the registration process. The registration features may interlock adjacently located manually manipulable devices according to the invention. In one embodiment, a manually manipulable device according to the invention is arranged to provide an indication when registration with another such device is achieved. The indication maybe audible or visible in nature.

Adjacent contacting edges of devices may be adapted to fit together or interlock only when correctly orientated so that both display said visual display material the same way up (i.e, top to bottom). A rectangularly shaped device may be adapted to be orientated with a similar device adjacent to each of its four side edges, and the proximity sensor is then adapted to sense each adjacent device.

In an alternative embodiment of the invention, the devices are used in conjunction with a board, tray or base on which they are placed and which is capable of identifying the location and identity of each device and communicating this to a central control unit or one or more of the devices so that they can generate the sensory response. The board itself may consist of a screen which is able to generate a display appropriate for the particular application and/or to generate the sensory response. In this alternative embodiment of the invention, the individual devices may not need to incorporate the proximity sensor because of the location sensing ability of the board.

In the above alternative embodiment, the board may be adapted so that it can recharge individual devices when placed in contact with it. Furthermore, this recharging feature may be provided in a board not having the device location capability.

A device according to the invention may also incorporate a camera that allows an image to be captured, this image being used as said visual display material on a visual display unit also incorporated in the device, or the image can be used in a visual sensory response.

A device according to the invention may also incorporate a microphone to allow sound to be captured and used in an audio sensory response.

A device according to the invention may also incorporate data input means in the form of a handwriting recognition device to input words, letters, symbols or numbers for use in characterisation of the device or programming a sensory response to be produced by the device.

It will be appreciated that an audio sensory response, such as incorporated in some of the embodiments described above, may take the form of a directional or stereo/audio response by arranging that two or more devices are controlled simultaneously or sequentially to generate appropriate sounds.

Programming of each device may be achieved by any of a number of different methods including connection to memory media such as smart cards or memory sticks; via a personal computer or hand-held computing device; or via said communications unit. In one example, each device may make use of the communications unit to receive information from a television broadcast so that the device is adapted for use in conjunction with a television programme being broadcast

A device according to the invention is preferably further adapted so that it incorporates a user sensor sensitive to touch and/or movement so that it can trigger a characterisation output when handle by a user. The characterisation output comprises a visual output or both a visual output and an audio output.

Specific technologies that can be used in embodiments of the invention include networked distributed intelligent small computers known as Specks or Motes; micro-electromechanical-systems MEMs, especially for audio components and sensors; and ZigBee radio or similar communications technology.

A manually manipulable device according to the invention is, from one aspect, a computing unit and as such can be designed to be a thin client in a client-server relationship with some other entity.

In one embodiment, a manually manipulable device according to the invention comprises a 32 Bit RISC (or better) CPU, memory, a graphics processor, an audio processor, a communications processor, internal data storage, a rechargeable power source and a touch-sensitive audio-visual display unit. The CPU is preferably capable of processing 200 Million Instructions Per Second (MIPS) or better. The CPU can preferably address 16Mb (or better) of Random Access Memory. The graphics processor and visual display will preferably be capable of rendering screen resolutions of 160 × 160 pixels (or better) in 8 bit colour (or better). Other versions will be able to process full motion video at 12.5 frames per second (or better) with 16 bit colour (or better) synchronised to audio. Other versions will have live video or still image capture via a built-in camera. The audio processor will preferably be capable of playback of 4 bit, 4 kHz mono audio (or better) and polyphonic tones. Enhanced versions will feature audio recording capability. The internal storage may be provided by Secure Digita] (SD) cards, MultiMedia Cards (MMC) or a hard disc arrangement. The communications processor will preferably include support for industry standard wireless protocols including Bluetooth and in future will support other emergent protocols including IEEE 802.15.4 and other near field communication protocols. It is presently preferred that a manually manipulable device according to the invention will have a real time operating system (RTOS).

Video apparatus could for example involve the use of screens 5cm x 5cm, but 8cm x 8cm might also be acceptable. The screens could for example comprise thin film transistor TFT screens with an active matrix 2.5" (4:3), a resolution 880x228 RGB delta, pixel size 56.5x64 HM, fully integrated single-phase analogue display drivers, signal input voltage 3V, driver frequency 3MHz, driver power consumption 15MW.

The power source is preferably a rechargeable battery and might comprise a photovoltaic generator.

The user sensor may also sense manipulation of the device by a user indicative of a positioning movement of the device requiring an assessment of its proximity relative to similar devices and the need to generate a sensory response corresponding to one of said arrangements of devices.

According to a further feature of the invention, each of said manually manipulable devices incorporates a visual display unit to display visual display material, and two or more of said devices are adapted to be arranged in a row so that said visual display material "reads" in a meaningful manner along said row. A similar device is locatable adjacent to one side of said row of devices, and thereby triggers a change in the visual display material on said similar device so that it matches that of said row of devices. For example, said similar device can be located below said row of devices to acquire a combination of characters from the row above it. This device displaying said combination of characters can then be re-used in a further row of devices to create a new combination of characters.

Each device may have an ON/OFF switch to allow it to be reset to a start up condition, for example, displaying initial pre-programmed visual display material.

By way of example only, certain embodiments of the invention will now be described with reference to the accompanying drawings, in which:
Figure 1 illustrates the external physical constitution of an interactive block;
Figure 2 illustrates, conceptually, the internal constitution of the interactive block of Figure 1;
Figure 3 illustrates how blocks of the kind illustrated in Figure 1 can be connected in registration with one another;
Figure 4 illustrates how blocks of the kind shown in Figure 1 can be used in a learning activity;
Figure 5 illustrates schematically an interactive block; and
Figure 6 illustrates schematically a tray or board which can interact with blocks of the kind shown in Figure 5.

One embodiment of the invention consists of a set of blocks, say 12 blocks, each being rectangular in shape and adapted to be positioned edge-to-edge with other blocks on either side (referred to as left-hand and right-hand edge) in the manner of a row, and top edge and bottom edge in the manner of a column. Each block incorporates a display screen over most of its front or upper surface, which forms part of an electronic visual display unit capable of displaying visual display material according to display data derived from a database. In this embodiments the visual display material consists of a lower case letter of the alphabet which is displayed on the screen when the block is first activated. Each block may incorporate a switch that allows it to be activated or deactivated, and operation of the switch initiates a start-up condition in which a pre-programmed letter is displayed. Programming of the blocks may be such that different combinations in a row can spell out fifteen to twenty different words appropriate for teaching a young child to read.

Each block incorporates a means of displaying its orientation as far as top and bottom is concerned, which may invoke the shape of the block or an indicator displayed in the display screen.

Each block further incorporates a proximity sensor or sensor adapted to allow it so sense the proximity of another block aligned edge-to-edge with it, preferably involving contact between said adjacent edges, either at the left hand edge or right-hand edge or top edge or bottom edge. The proximity sensor, or other ID sensor means independent of it, is adapted to sense the identity of each adjacent block.

Each block further incorporates a touch and/or movement sensor.

Each block further incorporates a wireless communications unit through which it can communicate with another block to transmit information relating to its own identity and visual display material and the identity and location of adjacent blocks and to receive information causing the visual display unit to change the visual display unit material.

Each block preferably further incorporates an audio generator which is adapted to produce an audio response in accordance with internal programming information received via the wireless communications unit.

It will be appreciated that a block with the communications, visual display and audio generator capability described above can be readily implemented using mobile telephone technology. Proximity sensors, ID sensors and touch and movement sensors can also be readily implemented using known technology. It will be appreciated that each block has its own power supply and incorporates a processor or processors which provide the required functionality.

A set of blocks is adapted to be sufficient in itself to provide the functionality described below with the processors operating in accordance with pre-programmed instructions and the inputs from the sensors of each so as to produce visual and audio responses in the blocks.

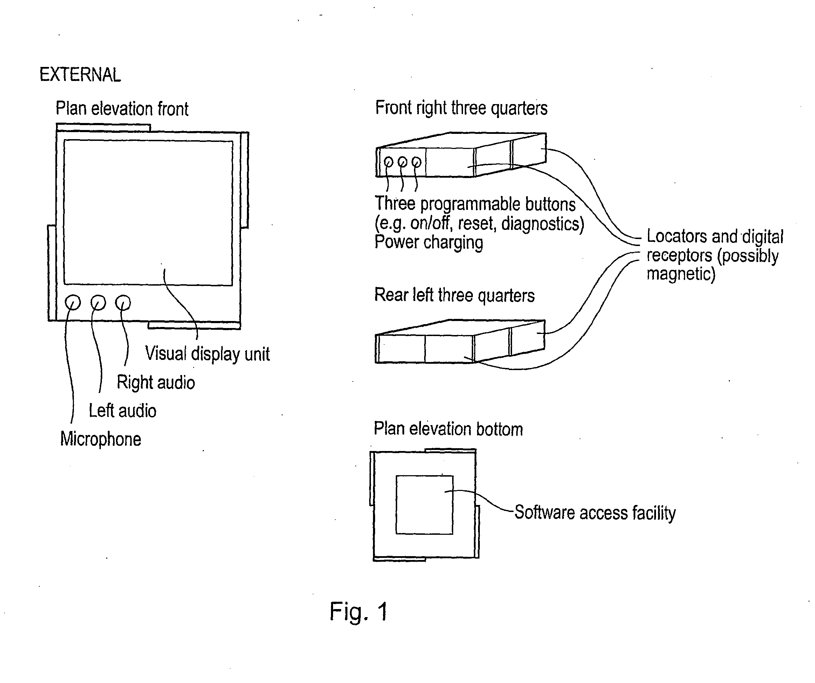

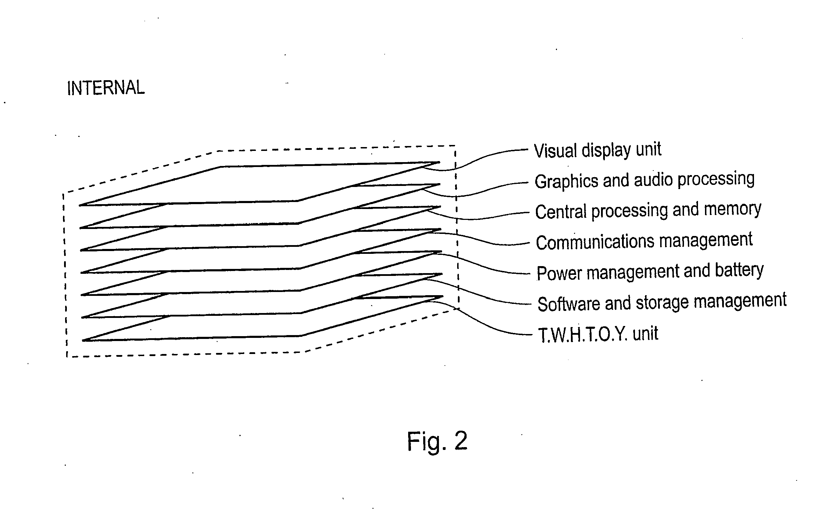

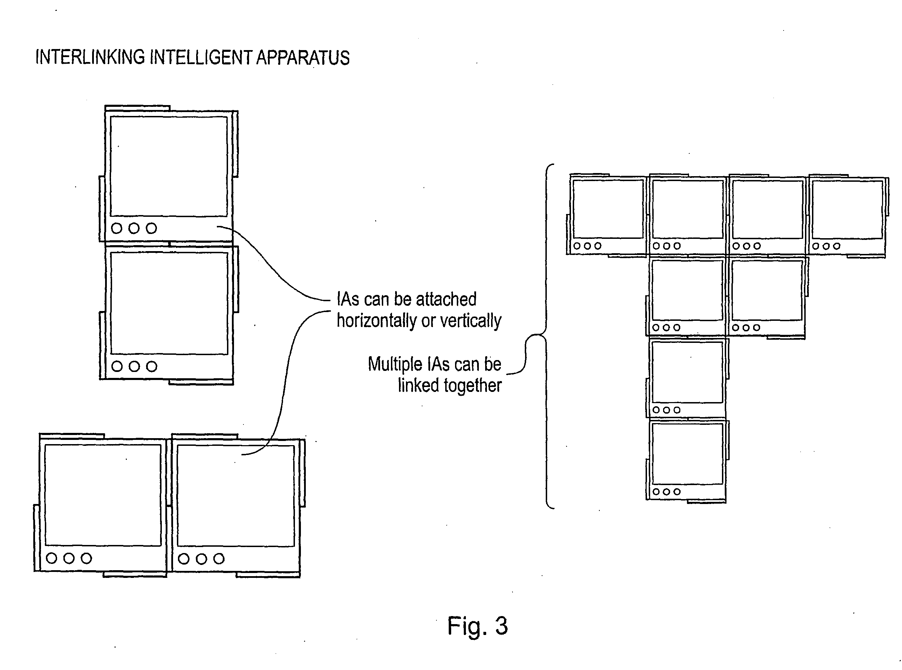

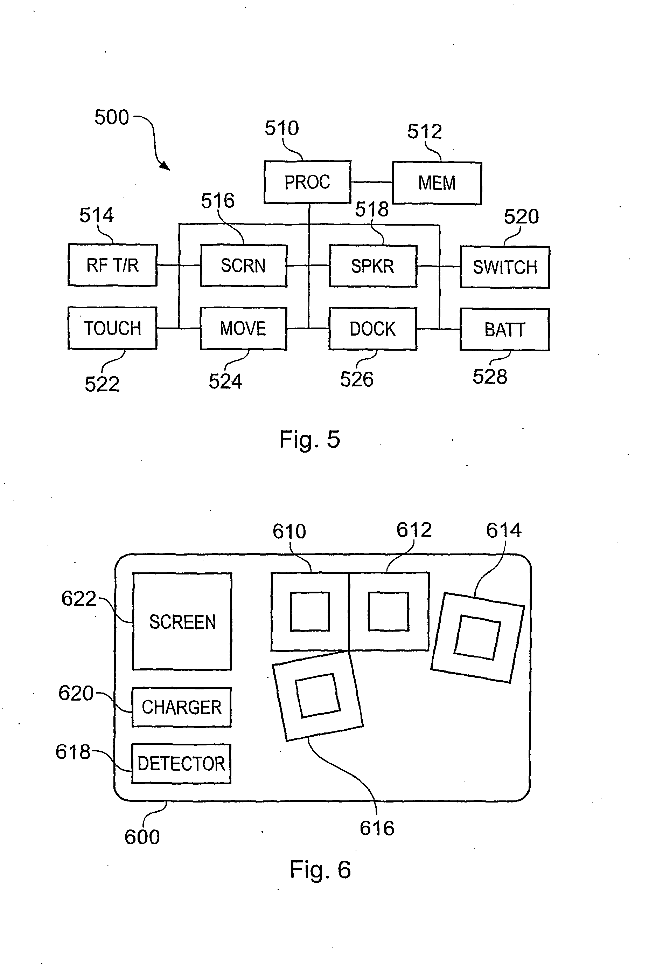

The constitution of an example one of the blocks is shown in Figures 1, 2 and 5. The internal construction of a block is shown conceptually in Figure 2 and in block diagram form in Figure 5. Figure 3 illustrates how blocks of this kind can be placed in registration with one another both vertically and horizontally.

Figure 5 illustrates the main components of a block. It will, of course, be apparent to the skilled person that this is a high level diagram illustrating only key components of the block. As shown in Figure 5, a block 500 comprises a processor 510, a memory 512, an RF transceiver 514, a screen 516, a speaker 518, a magnetic switch 520, a touch sensor 522, a movement sensor 524, a docking port 526 and a battery 528. The RF transceiver 514 enables the block 500 to communicate wirelessly with other, at least similar, blocks in the vicinity. The screen 516 and the speaker 518 allow visual and audio information to be presented to a user of the block 500. The magnetic switch 520 is activated by the proximity of another, at least similar, block. The touch sensor 522 is provided at the exterior of the block 500 to detect a user touching at least that area of the block 500. The movement switch 524 detects movement of the block 500 by a user. The docking port 526 is for receiving a memory card to load software/data into the block 500. The block 500 also includes a battery 528 that provides power to allow the various devices within the block to operate. The processor 510 processes, with the aid memory 512, information received from the RF transceiver 514, the switch 520, the touch sensor 522, the movement sensor 524 and the docking port 526 to cause, as appropriate, the RF transceiver 514 to communicate with other blocks and/or cause the screen 516 and/or the speaker 518 to present information to a user of the block 500.

Figure 6 shows a tray 600 for use with blocks, e.g. 610 to 616 of the kind described above with respect to Figures 1, 2 and 5. The board 600 comprises a detector 618 for determining the location and identity of blocks placed on the board. The board 600 also includes a charger for recharging the batteries of blocks that are placed on the board. The board also includes a screen 622 and is configured to present information to a user via the screen in response to interactions of the user with blocks on the board.

Examples of how the set of blocks can be used as alphabet blocks will now be now described.

Sam is four and a half. She's just started in her reception year at school where she's learning to read and write. Her parents are keen to help her learn at home and buy her a set of blocks with some preloaded reading software appropriate for her age.

Sam opens the box and takes out the blocks. Her parents are standing over, curious about how they work.

Each is displaying a different lower case letter.

She goes to pick one up and the unit sounds the letter it is displaying. For example, '/c/'. Moving each of the blocks she realises they all do the same.

In an alternative option, if there's 15 seconds inactivity, one block could say 'Try spelling a word, how about cat'. Alternatively pressing on a block could say, 'c sounds like /c/. /c/ is for cat. Move the blocks together to spell cat?'

Sam puts two of the blocks next to each other. Starting with the one on the left, the blocks read in turn the letters they are displaying. For example '/d/, /o/'. They then read the combined sound. For this example the blocks would say 'do'.

When she puts three 'random' letters together ('/c/, /f/, /g/'), they make no sound.

She plays around with some different combinations until a word is spelt. For example, '/c/, /a/, /t/. You've spelt cat. Well done.' At this point a cat leaps onto the screen, runs around and miaows.

In an alternative option, the blocks prompt the child what to do next? For example, 'Now you can copy the word you've made onto its own block, by placing one below. Or you can try and spell another word.'

When Sam puts another block below the word she has spelt, the word jumps down onto that single block. It's says 'cat' when she presses it.

The three blocks that originally spelt the word are now free to be used for another word.

As described above, each block is individually responsive to touch or movement and reacts audibly and visually depending upon what it displays.

If each block is responsive to both truck and movement separately, then each can have a secondary response, such as giving an example of use.

If a letter is displayed, e.g. "c", the block sounds the letter as in it is said in the alphabet and phonetically. For example, 'C. C sounds like /c/ for cat'. An animation may play on the screen relating to the letter and the example given. A secondary response might suggest what the user can do next? For example, 'Can you spell Cat?'

If a word is displayed e.g. "cat", the block sounds the phonetic letters for the word. For example, '/c/, /a/, /t/ spells cat'. An animation relating to the word plays on the screen. A secondary response might suggest the spelling of another word from the available letters if this is possible.

If a phonetic sound is displayed e.g. "ch", the block sounds the combined phonetic sound '/ch/ as in lunch'. The screen displays an animation of some food being eaten.

When blocks are placed next to each other they react depending what is on each. This could be a phonetic sound e.g. '/ch/', a word e.g. 'cat' or random letters e.g. '/k/, /r/, /f/'.

If the user places individual blocks alongside each other then they respond according to the combination of letters they display.

If a phonetic sound is created "ch", the blocks sound the combined sound, '/ch/'. They could also give a short example of use '/ch/ as in lunch, yum, yum, yum'.

If a word is created "cat", the blocks sound the individual letters followed by the word. For example, '/c/, /a/, /t/, spells cat. Well done, you've spelt cat'. The displays play a short animation. In this example a picture of a cat running between the two blocks. This happens whenever one of the joined blocks are pressed.

If a new word is created (plural or completely new) by adding a letter or letters to a current word of phonetic sound, the response might be, for example, `/c/, /a/, /r/, /t/, spells cart. Are you coming for a ride?' or '/c/, /a/, /t/, /s/ spells cats. Here they come!'. The displays animate according to the word spelt if the word has an associated animation in database. So in the above examples, a horse and cart could drive on and off the screens, or several cats could start playing around.

If a random set of letters are placed next to each other. For example '/d/, /f/, /r/, /g/', no sound is generated and no animation is displayed.

Animation and sound will only be available for some of the words that can be created using the blocks, as stated in a related response database held in one or each block or a central control unit.

If a user places one block adjacent the top edge of another, the lower block inherits the property of the upper block. Placing multiple blocks above or below will also cause a reaction between the blocks. For example, if the user places one block above another, and the top block shows '/b/' and the lower block shows '/b/', the lower block will also become a '/b/'.

A user can place a word spelt out over several blocks onto one block by placing a block below. This could also be used to join a '/c/' and an '/h/' on a single '/ch/' block.

If a user has spelt a word or phonetic sound using three individual blocks, for example, '/c/', '/a/' and '/t/' spelling 'cat', the user can then place a fourth block anywhere under the three letter blocks and the word "cat" moves onto a single block. However, if a user tries to copy two random letters onto a single block it will not work. For example '/g/' and '/f/' cannot be joined on a single '/gf/' block.

Likewise if the user has two word blocks that don't make a third word, they cannot be copied onto a single block. For example 'cat' and 'sat' cannot be joined to make a 'catsat' block.

If a user has the word cat on a single block and wants to split it into three separate letters, they need to place three blocks below the word block. The three letters each go into their own block in right to left order below.

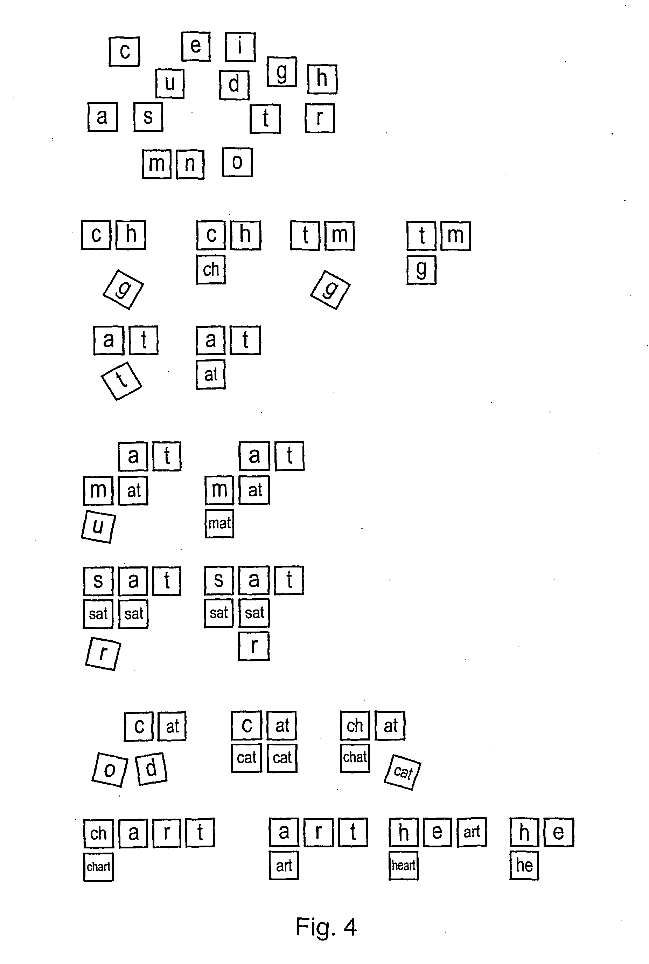

An example of use of a set of alphabet blocks operating according to the above principles is illustrated in Figure 4, in a number of steps 1-6.
1. Blocks are taken out of the box and arranged on the floor.
2. User puts '/c/' and '/h/' together, the blocks sound '/ch/'. They put '/g/' underneath and copy '/ch/' onto it. Trying to copy '/t/', '/m/' onto '/g/' doesn't work.
3. '/a/' and '/t/' are joined to make 'at' and copied onto a single block.
4. '/m/' is put in front of 'at' to make 'mat'. The individual '/a/' and '/t/' blocks are still joined to the top of 'at', but have no direct effect to the '/m/' as they are not directly above but to one side. '/u/' is put below the '/m/' of 'mat' and 'mat' is copied onto the single block, which is then removed (not illustrated).
5. A '/s/' block is put in front of the '/a/' and '/t/' blocks to spell 'sat'. As the '/m/' of 'mat' is now below the '/s/' block the word 'sat' is copied onto it. 'sat' is also copied onto the 'at' block. The two 'sat' blocks don't interact with each other as a new word or sound hasn't been created. Likewise when a 'r' block is placed below either of the 'sat' blocks nothing is copied down.
6. Using the blocks here is a chain of various words that can be created following the principles described in the functional specifications.

The invention is applicable to diverse areas, which include but are not limited to, play, entertainment, adornment and decoration, environment, industry and learning (of, for example, languages, mathematics and musical skills/knowledge).

Play applications may include a variety of playful games using the blocks and, optionally, a tray of the type mentioned in the introduction. These include new games as well as enhancements of typical existing board and card games with additional features (by virtue of the fact the pieces (blocks) can change their image and emit sounds) and the board (interactive base) can also change its image. Further, new forms of toy such as farmyards and zoos can be created and become elements of animated stories.

In relation to adornment and decoration, in the educational context, IA blocks can be worn as badges that can enable students to role play their various functions (letters, sounds, numbers) and interact with other badge-wearing children to form words, tunes and equations. Beyond this, IA blocks have implicit emotive, aesthetic, interactive, and descriptive capabilities. Blocks in combination can be used to trigger social and artistic interactions between people or create more complex installations.

In environment and industrial settings variations of the devices can enable audio and visual data /systems alone or in combination (e.g. for health and safety measurement and control).

## Claims

1. A manually manipulable device (500) comprising:
a processor (510) arranged to control operation of the device (500);
a power source (528) providing power to the device (500);
a visual display unit (516) arranged to display visual display material;
a response generator (516, 518) for generating a sensory response;
a communications unit (514) configured, in use, to effect communication with a similar manually manipulable device; and
wherein the device (500) is configured to present a changeable individual characterization represented by display of visual display material and wherein the processor (510) generates a sensory response in its response generator (516, 518) or a sensory response in a response generator of a similar device (610-616), the generated sensory response dependent upon at least one of the individual characterization presented by the device (500) itself and an individual characterization presented by the similar device (610-616),
the manually manipulable device **characterized in that**:
the sensory response output by the response generator follows manual manipulation of the device and interaction between changeable individual characterizations, the interaction dependent upon relative position between the device and at least an adjacently located interacting device;
the manually manipulable device further includes a proximity sensor (520) configured to sense said relative position; and wherein:
the changeable individual characterization of the manually manipulable device represented by display of visual display material takes the form of at least one of: a letter; a group of letters; a word; words; a number; a mathematical symbol; or a musical symbol;
the individual characterization on the similar device (610-616) represented visually as: a letter; a group of letters; a word; words; a number; a mathematical symbol; or a musical symbol, and
the individual characterization of the manually manipulable device (500) is controlled by the processor (510) and selectively changeable over time based upon:
i) the nearby detection of the similar device (610-616); and
ii) the individual characterization presented on that similar device (610-616) at the time of its detection.

2. The device (500) as claimed in claim 1, wherein the sensory response includes a related visual animation.

3. The device (500) as claimed in any preceding claim, in which the response generator (516, 518) comprises an audio generator (518) arranged to generate at least one of:
a phoneme;
a word, phrase or sentence;
speech relating to mathematical properties of a visually presented number; and
an audio musical response corresponding to a musical symbol.

4. The device (500) as claimed in any preceding claim, which is programmable to determine the individual characterization and/or sensory response to be generated.

5. The device (500) as claimed in any preceding claim, in which the communications unit (514) is adapted to communicate with other similar devices (610-616) to identify itself and to generate a sensory response.

6. The device (500) as claimed in claim 5, in which the communications unit (514) comprises a wireless device.

7. The device (500) as claimed in any preceding claim, in which the communications unit (514) is configured to communicate the proximity of an adjacent device as detected by the proximity sensor.

8. The device (500) as claimed in claim 7, in which the communications unit (514) is configured to communicate the identity of said adjacent device.

9. The device (500) as claimed in any preceding claims, in which edges of the device (500) are adapted to fit together or interlock with those of a similar device (610-616) in a predetermined orientation consistent with visual display material on each device.

10. The device (500) as claimed in claim 1, which includes a camera that is adapted to capture an image to be displayed on said visual display device (516).

11. she device (500) as claimed in claim 3, which includes a microphone that is adapted to capture sound to be reproduced by said audio generator (518).

12. The device (500) as claimed in any preceding claim, which includes data input means (512) to input data for use in individual characterization of the device (500) or in programming a sensory response.

13. The device (500) as claimed in any preceding claim, which includes a user sensor (522) sensitive to touch and adapted to trigger sensory output.

14. The device (500) as claimed in claim 13, in which sensory output triggered by the user sensor (522) produces an output from one or more other devices.

15. The device (500) as claimed in claim 13, in which the sensory output triggered by the user comprises a characterization output.

16. The device (500) as claimed in any preceding claim, which includes a movement sensor (524) adapted to sense movement of the device to trigger a sensory response.

17. The device (500) as claimed in any preceding claim, further adapted to identify an adjacent device and to communicate information of both the identity and position of the adjacent device to other devices via said communications unit (514) so that an appropriate sensory response can be generated.

18. A set of at least two manually manipulable devices (610-616), each device in accordance with any of claims 1 to 17 and thus adapted to present a changeable individual characterization represented by display of visual display material taking the form of at least one of: a letter; a group of letters; a word; words; a number; a mathematical symbol; or a musical symbol, each manually manipulable devices (610-616 locatable relative to other such devices in multiple different arrangements,
wherein the devices (500) generate a co-ordinated sensory response through at least one of said response generators (516, 518) of said at least two manually manipulable devices of the set (610-616), the co-ordinated response in accordance with the arrangement of the devices, the sensory response dependent upon at least at least one of the individual characterization presented by a first one of the at least two devices (610-616) and a combination of the individual characterizations of at least two of said at least two devices.

19. The set of devices (610-616) as claimed in claim 18, in which said sensory response comprises a visual display generated on the visual display (516) of one or more of said devices.

20. The set of devices (610-616) as claimed in any of claims 18 or 19 in which the response generator comprises an audio generator (518) arranged to generate at least one of:
a phoneme;
a word, phrase or sentence;
speech relating to mathematical properties of a visually presented number; and an audio musical response corresponding to a musical symbol.

21. The set of devices (610-616) as claimed in claims 18 to 20, and a board (600) on which the devices (610-616) are to be placed in said multiple different arrangement and which is capable of identifying (618) the location and identity of each device.

22. The set of devices (610-616) as claimed in claim 21, in which the board (600) incorporates a screen (622) configured to generate a visual display.

23. The set of devices (610-616) as claimed in claim 21 or 22, in which the board (600) incorporates means (620) to recharge the power source (528) in each device (610-616) when located on the board (600).

24. The set of devices (610-616) as claimed in any claims 18 to 23, in which the communications unit (514) of one or more devices is adapted to receive programming data from a television broadcast.

25. The set of devices (610-616) as claimed in claim 18, in which at least two of said devices are configured to be arranged in a line so that said visual display material reads in a meaningful manner along said line, and a similar device is locatable adjacent to one side of said line of devices and thereby triggers a change in the visual display material on said similar device so that it matches that of said line of devices.

26. The set of devices (610-616) as claimed in any one of claims 18 to 25, which are configured to communicate via said communications units (514) to form an intelligent computing network which is able to respond in accordance with the arrangement of the devices and generate said sensory response.

27. Learning apparatus comprising one or more devices (500) as claimed in any of claims 1 to 17.

28. Games apparatus comprising one or more devices (500) as claimed in any of claim 1 to 26.

## Patentansprüche

1. Manuell manipulierbare Vorrichtung (500), umfassend:
einen Prozessor (510), der angeordnet ist, den Betrieb der Vorrichtung (500) zu steuern;
eine Energiequelle (528), die die Vorrichtung (500) mit Energie versorgt;
eine visuelle Darstellungseinheit (516), die angeordnet ist, visuelles Darstellungsmaterial darzustellen;
eine Antworterzeugungseinheit (516, 518) zum Erzeugen einer Sinnesantwort;
eine Kommunikationseinheit (514), die im Betrieb dazu ausgestaltet ist, die Kommunikation mit einer vergleichbaren manuell manipulierbaren Vorrichtung zu bewirken;
wobei die Vorrichtung (500) dazu ausgestaltet ist, eine veränderbare individuelle Charakterisierung zu präsentieren, die durch die Darstellung von visuellem Darstellungsmaterial repräsentiert wird, und wobei der Prozessor (510) eine Sinnesantwort in dessen Antworterzeugungseinheit (516, 518) oder eine Sinnesantwort in einer Antworterzeugungseinheit einer vergleichbaren Vorrichtung (610-616) erzeugt, wobei die erzeugte Sinnesantwort von wenigstens einer der individuellen Charakterisierungen, die von der Vorrichtung (500) selbst präsentiert werden, und/oder einer individuellen Charakterisierung abhängt, die von der vergleichbaren Vorrichtung (610-616) präsentiert wird;
wobei die manuell manipulierbare Vorrichtung **dadurch gekennzeichnet ist, dass**:
die Ausgabe der Sinnesantwort durch die Antworterzeugungseinheit der manuellen Manipulation der Vorrichtung und dem Zusammenwirken zwischen veränderbaren individuellen Charakterisierungen folgt, wobei das Zusammenwirken von der relativen Position zwischen der Vorrichtung und wenigstens einer benachbart angeordneten, zusammenwirkenden Vorrichtung abhängt;
die manuell manipulierbare Vorrichtung ferner einen Annäherungssensor (520) umfasst, der dazu ausgestaltet ist, die relative Position zu erfassen; und wobei:
die veränderbare individuelle Charakterisierung der manuell manipulierbaren Vorrichtung, die durch die Darstellung von visuellem Darstellungsmaterial repräsentiert wird, eine oder mehrere der folgenden Formen annimmt: ein Buchstabe, eine Gruppe von Buchstaben, ein Wort, Wörter, eine Zahl, ein mathematisches Symbol und/oder ein musikalisches Symbol, und
die individuelle Charakterisierung auf der vergleichbaren Vorrichtung (610-616) visuell dargestellt wird als: ein Buchstabe, eine Gruppe von Buchstaben, ein Wort, Wörter, eine Zahl, ein mathematisches Symbol oder ein musikalisches Symbol, und
die individuelle Charakterisierung der manuell manipulierbaren Vorrichtung (500) durch den Prozessor (510) gesteuert wird und im Verlauf der Zeit selektiv verändert werden kann, und zwar auf der Grundlage von:
(i) der nahen Detektion der vergleichbaren Vorrichtung (610-616); und
(ii) der individuellen Charakterisierung, die zum Zeitpunkt von deren Detektion auf der vergleichbaren Vorrichtung (610-616) präsentiert wird.

2. Vorrichtung (500) nach Anspruch 1, wobei die Sinnesantwort eine damit zusammenhängende visuelle Animation umfasst.

3. Vorrichtung (500) nach einem der vorhergehenden Ansprüche, wobei die Antworterzeugungseinheit (516, 518) eine Audioerzeugungseinheit (518) umfasst, die angeordnet ist, um zu erzeugen:
ein Phonem;
ein Wort, eine Phrase oder einen Satz;
Sprache, die mit mathematischen Eigenschaften einer visuell dargestellten Zahl im Zusammenhang steht; und/oder
eine musikalische Audioantwort, die einem musikalischen Symbol entspricht.

4. Vorrichtung (500) nach einem der vorhergehenden Ansprüche, die programmiert werden kann, um die individuelle Charakterisierung und/oder die Sinnesantwort zu bestimmen, die erzeugt werden sollen.

5. Vorrichtung (500) nach einem der vorhergehenden Ansprüche, wobei die Kommunikationseinheit (514) dazu ausgestaltet ist, um mit anderen vergleichbaren Vorrichtungen (610-616) zu kommunizieren, um sich selbst zu identifizieren und eine Sinnesantwort zu erzeugen.

6. Vorrichtung (500) nach Anspruch 5, wobei die Kommunikationseinheit (514) eine drahtlose Vorrichtung umfasst.

7. Vorrichtung (500) nach einem der vorhergehenden Ansprüche, wobei die Kommunikationseinheit (514) dazu ausgestaltet ist, die Nähe einer benachbarten Vorrichtung zu kommunizieren, wie diese durch den Annäherungssensor erfasst wird.

8. Vorrichtung (500) nach Anspruch 7, wobei die Kommunikationseinheit (514) dazu ausgestaltet ist, die Identität der benachbarten Vorrichtung zu kommunizieren.

9. Vorrichtung (500) nach einem der vorhergehenden Ansprüche, wobei die Kanten der Vorrichtung (500) dazu ausgestaltet sind, mit denen einer vergleichbaren Vorrichtung (610-616) in einer vorbestimmten Orientierung zusammenzupassen oder mit diesen verriegelt zu werden, die mit dem visuellen Darstellungsmaterial auf jeder Vorrichtung konsistent ist.

10. Vorrichtung (500) nach Anspruch 1, die eine Kamera umfasst, die dazu ausgestaltet ist, ein Bild aufzunehmen, das auf der visuellen Darstellungsvorrichtung (516) dargestellt werden soll.

11. Vorrichtung (500) nach Anspruch 3, die ein Mikrophon umfasst, das dazu ausgestaltet ist, Sound zu erfassen, der von der Audioerzeugungseinheit (518) wiedergegeben werden soll.

12. Vorrichtung (500) nach einem der vorhergehenden Ansprüche, die Dateneingabemittel (512) umfasst, um Daten für die Verwendung in der individuellen Charakterisierung der Vorrichtung (500) oder für die Programmierung einer Sinnesantwort einzugeben.

13. Vorrichtung (500) nach einem der vorhergehenden Ansprüche, die einen Benutzersensor (522) umfasst, der für Berührungen sensitiv ist und dazu ausgestaltet ist, eine Sinnesausgabe zu triggern.

14. Vorrichtung (500) nach Anspruch 13, wobei die Sinnesausgabe, die durch den Benutzersensor (522) getriggert wird, eine Ausgabe einer oder mehrerer anderer Vorrichtungen erzeugt.

15. Vorrichtung (500) nach Anspruch 13, wobei die Sinnesausgabe, die durch den Benutzer getriggert wird, eine Charakterisierungsausgabe umfasst.

16. Vorrichtung (500) nach einem der vorhergehenden Ansprüche, die einen Bewegungssensor (524) umfasst, der dazu ausgestaltet ist, Bewegung der Vorrichtung zu erfassen, um eine Sinnesantwort zu triggern.

17. Vorrichtung (500) nach einem der vorhergehenden Ansprüche, wobei die Vorrichtung ferner dazu ausgestaltet ist, eine benachbarte Vorrichtung zu identifizieren und Informationen sowohl über die Identität als auch die Position der benachbarten Vorrichtung über die Kommunikationseinheit (514) an andere Vorrichtungen zu kommunizieren, so dass eine geeignete Sinnesantwort erzeugt werden kann.

18. Satz von wenigstens zwei manuell manipulierbaren Vorrichtungen (610-616), wobei jede Vorrichtung nach einem der Ansprüche 1 bis 17 ausgebildet ist und somit dazu ausgestaltet ist, eine veränderbare individuelle Charakterisierung zu präsentieren, die durch die Darstellung des visuellen Darstellungsmaterials repräsentiert wird, das wenigstens eine der folgenden Formen annimmt: ein Buchstabe, eine Gruppe von Buchstaben, ein Wort, Wörter, eine Zahl, ein mathematisches Symbol oder ein musikalisches Symbol, wobei jede der manuell manipulierbaren Vorrichtungen (610-616) relativ zu anderen solchen Vorrichtungen in zahlreichen unterschiedlichen Anordnungen lokalisiert werden kann,
wobei die Vorrichtungen (500) eine koordinierte Sinnesantwort durch wenigstens eine der Antworterzeugungseinheiten (516, 518) der wenigstens zwei manuell manipulierbaren Vorrichtungen des Satzes (610-616) erzeugen, wobei die koordinierte Antwort gemäß der Anordnung der Vorrichtungen erfolgt, wobei die Sinnesantwort von wenigstens einer der individuellen Charakterisierungen abhängt, die durch eine erste Vorrichtung der wenigstens zwei Vorrichtungen (610-616) und eine Kombination der individuellen Charakterisierungen von wenigstens zwei Vorrichtungen der wenigstens zwei Vorrichtungen präsentiert wird.

19. Satz von Vorrichtungen (610-616) nach Anspruch 18, wobei die Sinnesantwort eine visuelle Darstellung umfasst, die auf der visuellen Darstellungseinheit (516) von einer oder mehreren der Vorrichtungen erzeugt wird.

20. Satz von Vorrichtungen (610-616) nach einem der Ansprüche 18 oder 19, wobei die Antworterzeugungseinheit eine Audioerzeugungseinheit (518) umfasst, die angeordnet ist, um eines der folgenden Elemente zu erzeugen:
ein Phonem;
ein Wort, eine Phrase oder einen Satz;
Sprache, die mit mathematischen Eigenschaften einer visuell präsentierten Zahl im Zusammenhang steht; und
eine musikalische Audioantwort, die einem musikalischen Symbol entspricht.

21. Satz von Vorrichtungen (610-616) nach einem der Ansprüche 18 bis 20 und ein Board (600), auf dem die Vorrichtungen (610-616) in den zahlreichen unterschiedlichen Anordnungen anzuordnen sind und das dazu geeignet ist, die Position und die Identität von jeder Vorrichtung zu identifizieren (618).

22. Satz von Vorrichtungen (610-616) nach Anspruch 21, wobei das Board (600) einen Bildschirm (622) umfasst, der dazu ausgestaltet ist, eine visuelle Darstellung zu erzeugen.

23. Satz von Vorrichtungen (610-616) nach Anspruch 21 oder 22, wobei das Board (600) Mittel (620) zum Wiederaufladen der Energiequelle (528) in jeder Vorrichtung (610-616) umfasst, wenn diese auf dem Board (600) angeordnet sind.

24. Satz von Vorrichtungen (610-616) nach einem der Ansprüche 18 bis 23, wobei die Kommunikationseinheit (514) von einer oder mehreren Vorrichtungen dazu ausgestaltet ist, Programmierungsdaten von einer Fernsehübertragung zu empfangen.

25. Satz von Vorrichtungen (610-616) nach Anspruch 18, wobei wenigstens zwei der Vorrichtungen dazu ausgestaltet sind, in einer Linie angeordnet zu werden, so dass das visuelle Darstellungsmaterial sich auf eine sinnvolle Art und Weise entlang der Linie lesen lässt, und wobei eine vergleichbare Vorrichtung angrenzend der einen Seite der Linie von Vorrichtungen angeordnet werden kann und somit eine Veränderung des visuellen Darstellungsmaterial auf der vergleichbaren Vorrichtung derart triggert, dass dieses zu dem der Linie von Vorrichtungen passt.

26. Satz von Vorrichtungen (610-616) nach einem der Ansprüche 18 bis 25, die dazu ausgestaltet sind, über die Kommunikationseinheiten (514) zu kommunizieren, um ein intelligentes Computernetzwerk auszubilden, das dazu geeignet ist, in Übereinstimmung mit der Anordnung der Vorrichtungen zu antworten und die Sinnesantwort zu erzeugen.

27. Lernvorrichtung, die eine oder mehrere Vorrichtungen (500) nach einem der Ansprüche 1 bis 17 umfasst.

28. Spielvorrichtung, die eine oder mehrere Vorrichtungen (500) nach einem der Ansprüche 1 bis 26 umfasst.

## Revendications

1. Dispositif (500) manipulable à la main comprenant :
- un processeur (510) disposer pour commander le fonctionnement du dispositif (500) ;
- une source d'alimentation (528) qui fournit de l'alimentation au dispositif (500) ;
- une unité d'affichage visuel (516) disposée pour afficher de la matière d'affichage visuelle;
- un générateur de réponse (516, 518) pour générer une réponse sensorielle ;
- une unité de communications (514), configurée, lors de sa mise en oeuvre, pour effectuer de la communication avec un dispositif manipulable à la main semblable ;
- dans lequel le dispositif (500) est configuré pour présenter une caractérisation modifiable individuelle représentée par l'affichage de la matière d'affichage visuelle, et dans lequel le processeur (510) génère une réponse sensorielle dans son générateur de réponse (516, 518) ou une réponse sensorielle dans un générateur de réponse d'un dispositif semblable (610-616), la réponse sensorielle générée étant dépendante sur au moins l'une des caractérisations individuelles présentées par le dispositif (500) lui-même, et une caractérisation individuelle présentée par le dispositif semblable (610-616),
- le dispositif manipulable à la main étant **caractérisé en ce que** :
- la réponse sensorielle émise par le générateur de réponse sensorielle fait suite à une manipulation à la main du dispositif et de l'interaction entre des caractérisations individuelles, l'interaction étant dépendante de la position relative du dispositif et d'au moins un dispositif semblable interactif situé de manière adjacente audit dispositif ;
- le dispositif manipulable à la main incluant en outre un capteur de proximité (520) configuré pour capter ladite position relative ; et dans lequel :
- la caractérisation individuelle du dispositif manipulable à la main représentée par l'affichage de la matière d'affichage visuelle prend la forme d'au moins un élément choisi parmi une lettre, un groupe de lettres, un mot, des mots, un chiffre, un symbole mathématique ou un symbole musical ;
- la caractérisation individuelle du dispositif semblable (610-616) est représentée visuellement par une lettre, un groupe de lettres, un mot, des mots, un chiffre, un symbole mathématique ou un symbole musical, et
- la caractérisation individuelle du dispositif (500) manipulable à la main est commandée par le processeur (510) et est modifiable de manière sélectionnable avec le temps, basé sur :
- la détection à proximité du dispositif semblable (610-616) ; et
- la caractérisation individuelle présentée sur ledit dispositif semblable (610-616), au moment de sa détection.

2. Dispositif (500) selon la revendication 1, dans lequel la réponse sensorielle comprend une animation visuelle liée.

3. Dispositif (500) selon l'une quelconque des revendications précédentes, dans lequel le générateur de réponse (516, 518) comprend un générateur audio (516) disposé de sorte à pouvoir générer un élément choisi parmi :
- un phonème ;
- un mot, une expression ou une phrase ;
- des paroles liées aux propriétés mathématiques d'un chiffre présenté visuellement ;
- et une réponse audio-musicale correspondant à un symbole musical.

4. Dispositif (500) selon l'une quelconque des revendications précédentes, lequel est programmable pour déterminer la caractérisation individuelle et/ou la réponse sensorielle à générer.

5. Dispositif (500) selon l'une quelconque des revendications précédentes, dans lequel l'unité de communications (514) est adaptée pour pouvoir communiquer avec d'autres dispositifs semblables (610-616), afin de pouvoir s'identifier et générer une réponse sensorielle.

6. Dispositif (500) selon la revendication 5, dans lequel l'unité de communications comprend un dispositif sans fil.

7. Dispositif (500) selon l'une quelconque des revendications précédentes, dans lequel l'unité de communications (514) est configurée pour communiquer la proximité d'un dispositif adjacent tel que détecté par le capteur de proximité.

8. Dispositif (500) selon la revendication 7, dans lequel l'unité de communications (514) est configurée pour communiquer l'identité dudit dispositif adjacent.

9. Dispositif (500) selon l'une quelconque des revendications précédentes, dans lequel des bords d'un dispositif (500) sont adaptés pour s'associer ou s'intercaler avec ceux d'un dispositif semblable (610-616) dans une orientation prédéterminée cohérente avec l'affichage de la matière d'affichage visuelle de chaque dispositif.

10. Dispositif (500) selon la revendication 1, lequel comprend une caméra adaptée à prende une image à afficher et l'afficher sur le dispositif d'affichage visuel (516).

11. Dispositif (500) selon la revendication 3, qui comprend un microphone adapté à enregistrer du son destiné à rediffusé par le générateur d'audio (518).

12. Dispositif (500) selon l'une quelconque des revendications précédentes, lequel comprend des moyens de saisie de données (512) pour entrer des données dans le dispositif, servant à la caractérisation individuelle du dispositif (500) ou à programmer une réponse sensorielle.

13. Dispositif (500) selon l'une quelconque des revendications précédentes, lequel comprend un capteur utilisateur (522) sensible au toucher et adapté à déclencher une sortie sensorielle.

14. Dispositif (500) selon la revendication 13, dans lequel la sortie sensorielle déclenchée par le capteur utilisateur (522) produit une sortie provenant d'un ou plusieurs autres dispositifs.

15. Dispositif (500) selon la revendication 13, dans lequel la sortie sensorielle déclenchée par l'utilisateur comprend une sortie de caractérisation.

16. Dispositif (500) selon l'une quelconque des revendications précédentes, lequel comprend un capteur de mouvement (524) adapté à détecter un mouvement du dispositif pour déclencher une réponse sensorielle.

17. Dispositif (500) selon l'une quelconque des revendications précédentes, adapté en outre pour identifier un dispositif adjacent et communiquer des informations sur l'identité et la position de celui-ci aux autres dispositifs via l'unité de communications (514) de telle sorte qu'une réponse sensorielle appropriée puisse être générée.

18. Ensemble d'au moins deux dispositifs manipulables à la main (610-616), chaque dispositif étant défini selon l'une quelconque des revendications 1 à 17 et ainsi adapté à présenter une caractérisation individuelle modifiable, par le biais de l'affichage de la matière d'affichage visuelle, qui prend la forme d'au moins un élément choisi parmi : une lettre, un groupe de lettres, un mot, des mots, un chiffre, un symbole mathématique, ou un symbole musical, chaque dispositif manipulable (610-616) à la main étant localisable par rapport à d'autres dispositifs du même genre dans différents arrangements multiples, dans lequel les dispositif génèrent une réponse sensorielle coordonnée à travers au moins l'un desdits générateurs de réponse (516, 518) desdits au moins deux dispositifs de l'ensemble (610-616) manipulables à la main, la réponse coordonnée étant en rapport avec l'arrangement desdits dispositifs, la réponse sensorielle étant dépendante d'au moins l'une des caractérisations individuelles présentée par un premier des au moins deux dispositifs (610-616) de l'ensemble et une combinaison des caractérisations individuelles d'au moins deux desdits au moins deux dispositifs.

19. Dispositif (610-616) selon la revendication 18, dans lequel ladite réponse sensorielle comprend un affichage visuel généré sur l'unité d'affichage visuel (516) de l'un ou plusieurs desdits dispositifs.

20. Ensemble de dispositifs (610-616) selon l'une quelconque des revendications 18 ou 19, dans lequel le générateur de réponse comprend un générateur audio (518) organisé pour générer au moins un élément parmi :
- un phonème ;
- un mot, une expression ou une phrase ;
- des paroles relatives aux propriétés d'un chiffre présenté visuellement ;
- et une réponse audio-musicale correspondant à un symbole musical.

21. Ensemble de dispositifs (610-616) selon l'une quelconque des revendications 18 à 20, et un plateau (600) destiné à recevoir lesdits dispositifs dans les différents arrangements multiples et qui est capable d'identifier (618) la position et l'identité de chaque dispositif.

22. Ensemble de dispositifs (610-616) selon la revendication 21, dans lequel le plateau (600) comprend un écran (622) configuré pour générer un affichage visuel.

23. Ensemble de dispositifs (610-616) selon l'une quelconque des revendications 21 ou 22, dans lequel le plateau (600) comprend des moyens (620) permettant de recharger la source d'alimentation (528) dans chaque dispositif (610-616) lorsqu'il est positionné sur le plateau (600).

24. Ensemble de dispositifs (610-616) selon l'une quelconque des revendications 18 à 23, dans lequel l'unité de communications (514) de l'un ou plusieurs des dispositifs est adaptée à recevoir des données de programmation provenant d'une diffusion télévisée.

25. Ensemble de dispositifs (610-616) selon la revendication 18, dans lequel au moins deux desdits dispositifs sont configurés pour être disposées de manière alignée de telle sorte que la matière d'affichage visuelle se lit de façon compréhensible le long de cette ligne, et un dispositif semblable est positionnable de manière adjacente à un côté de ladite ligne de dispositifs et déclenche ainsi un changement de l'affichage de la matière d'affichage visuelle dudit dispositif semblable de sorte qu'elle soit égale à celle des dispositifs alignés.

26. Ensemble de dispositifs (610-616) selon l'une quelconque des revendications 18 à 25, lesquels sont configurés pour communiquer via ladite unité de communications (514) pour former un réseau de calcul intelligent capable de répondre selon la disposition desdits dispositifs et générer ladite réponse sensorielle.

27. Appareil d'apprentissage comprenant un ou plusieurs dispositifs (500) selon l'une quelconque des revendications 1 à 17.

28. Appareil de jeu comprenant un ou plusieurs dispositifs (500) selon l'une quelconque des revendications 1 à 26.
